# EUROPEAN PATENT APPLICATION

(11) **EP 2 645 751 A1**
(43) Date of publication of application: **02.10.2013**
(21) Application number: 11843621.1
(22) Date of filing: 24.11.2011
(51) Int. Cl.: H04W 4/02, H04W 64/00

(54) **COMMUNICATION SYSTEM AND METHOD INVOLVING THE CREATION OF VIRTUAL SPACES**

(30) Priority: 24.11.2010 ES 201031727; 04.03.2011 ES 201130294; 14.07.2011 ES 201131196
(71) Applicant: Crambo, S.A., 28850 Torrejón de Ardoz (Madrid) (ES); Garcia Manchado, Nilo, 28850 Torrejon De Ardoz (ES)
(72) Inventor: GARCIA MANCHADO, Nilo, E-28850 Torrejón de Ardoz (Madrid) (ES)
(86) International application number: PCT/ES2011/070815
(87) International publication number: WO 2012/069686

(57) **Abstract**

A communication system involving the creation of virtual spaces comprises: (a) at least one mobile device (1, 1', 1") associated with at least one user, the mobile devices comprising at least data transmission means and means for accessing a wireless network; and (b) a server (2) with means for accessing the Internet and comprising at least means for storing user data of a plurality of users and means for identifying the users in the data base. The system is characterised in that the server (2) associates with the users within the coverage area of at least one predetermined wireless network (3, 3'), receiving from each mobile device (1, 1') information regarding the wireless networks (3, 3') within the coverage radius of the mobile devices and sending (4, 4') the data from each mobile device (1, 1', 1") to the other mobile devices within the coverage radius of the wireless network (3, 3') identified by the mobile devices by means of a unique identification code.

## Description

### Object of the invention

The object of the present invention is a communication system and method between mobile devices, like telephones, smartphones and portable computers with wireless network access, that allow the creation of rooms or virtual spaces where said communication is established without the use or consumption of the resources of the wireless networks in coverage, and even, without access to the same.

### Background of the invention

Different systems and methods to establish or develop social relations between different individuals are known in the State of the art. In the same way, it is known the fact that in environments for meetings or places where several persons are together it is very precious the ability to relate among those present themselves.

Technology known to date not allow a combination of social relations and spatial and temporal proximity, unless it is used certain type of combination with means of global positioning (GPS), but not all mobile devices have them. In addition, the GPSs, generally work only in open sky, so in many cases the user does not use systems of this type since he/she can be in an enclosed area at the moment of wanting to develop a close communication. The GPS position, in some cases, is associated with a wireless network station (or vice versa, assigning a GPS position to the wireless station), in such a way that it allows users on said network viewing the relationship of other individuals connected in a particular map, being an estimate of the position.

Other positioning systems allow an approximate position using triangulation from mobile phone antennas to which have access or provide coverage, but this localization method is not precise enough.

On the other hand, the wireless devices occasionally provide information as a Web page, creating a communication between the device and the user without actually connected, or have access to the Internet. This application, for example, is very common in hotels, wherein it is allows guests connect through the aforementioned wireless device, but only to the website of the said hotel, generally to enable the payment and use of the other services.

Thus, as it can be deduced, the currently known technology does not allow the location of a plurality of users in a particular area or enclosed area without access or consumption of network resources, so that privacy is kept in the network access.

So, for example, the document US20100313142A1 describes a location based social networking system which does not solve the problem of privacy, since it is mandatory to enter the WIFI network located to access the services provided by the server.

US20090215469A1 starts from the assumption that the network is which detects the mobile device and not the other way round, for that subsequently it invites the mobile device to enter the network and this is then authenticated in a server. Proof of this is that this system needs to implement sensors for detecting the presence of the mobile device, which represents a clear disadvantage. In any case, the mobile device accesses the WIFI network to access services established in the social network.

US20100069058A1 establishes a peer to peer communication, without the intervention of a server, between two mobile devices through an affinity criterion defined between them. It does not establish a communication area or region, but the communication is exclusive of a channel established between both mobile devices.

In US7620404B2 it is calculated the distance between the contacts from a mobile device, in other words, our address book is transmitted to a server through a wireless link and a correspondence is established with the location of other mobile devices registered in the server and which indicate its position, to subsequently notify that person of the proximity of any of the contacts.

Finally, W003001825 describes a system where through a wireless network (thus accessing to it assuming the privacy risks inherent to it, as already mentioned) it can be established all kind of communications with a group of persons associated with a server.

Other known systems for locating people using GPS and WLAN combinations are known for example in documents US7305245, US7403762, US7414988, US7433694, US7471954, US7474897, US7493127, US7502620, US7515578, US7551579, US7551929, US7768963, US7769396, US7818017, US7835754, US7856234, US7916661, US7999742, US8014788, US8019357, US8022877, and US8031657,

It is not known by the applicant skilled in the art the existence of any document that reflects the technical features set out in the present patent.

### Description of the invention

It is an object of the present invention to develop a system and a method for the creation of environments or virtual rooms located physically in a specific space based on the coverage of a mobile device with regard to a predetermined wireless network.

When it is tried to perform a communication using wireless networks, always is from the perspective of establishing the communication via or through said network, i.e., being the router of wireless network the main access channel to the wireless network. This solution forces to the users to connect to a network, in principle, unknown, and it forces to the network owner to open said network to users, in principle, unknown, losing control about the type of access and/or use that they make on said network, with the obvious security problems that this entails.

In the present invention, the mobile device does not access the wireless network, but it simply detects it to then notify a server of its presence in the potential coverage area of said network, identifying it (using the unique identification code of said network), and receive information from other mobile devices present in said network, and/or that may be interesting for the default user profile in said server. This server - mobile device communication is based on GPRS messages, so that the privacy of said network is not violated, and the mobile device has no access to the same, ensuring the security and confidentiality.

As an option against the GPRS communication, it is clear that if the mobile device has access to other type of equivalent communication (because actually it has the right to communicate through other network, for example via Bluetooth® with respect to a computer connected via cable to the Internet), the communication can be established through an equivalent means, but in no case, violating the privacy of the wireless network defining the virtual room.

It is important to define that the set of users in the coverage area of a particular wireless network only uses said network as a reference for the position of mobile devices, by detecting the presence of the same, but without access to it in its entirety.

Once defined the set of users within the coverage area of a particular wireless network, users establish a virtual communication area between them, being accessible only for users in coverage of said wireless network, or wireless networks, since the condition is established, not by the server, but by the user who creates the virtual communication space in the server to which the users have access via GPRS, UMTS or wireless port released for that purpose.

The described invention solves the security problems associated with a non-secure wireless network. In addition, the main difference in respect of the systems where a wireless network is related with a GPS position is that they always try to locate the user position, while in the invention the main thing is not the physical location, but one or more users are visible for at least one wireless network, wherever they are physically, and that among them can be established a communication without access to the resources of said wireless network, or in the embodiment that if a free port of said wireless network is used, with a minimum consumption of resources of said network.

Thus, the object of the invention is made as the establishment of a virtual communication space through an external server, based on the location of a plurality of users within the coverage area of at least one wireless network, creating an immediate virtual space where said users are identified by the server and can communicate between them, reducing the consumption of network resources or, where applicable, canceling completely said consumption.

It is an object of the invention to provide a safe environment where the users can enter and create spaces or virtual rooms located in the environment where all users have access to said network, being able to communicate in that place (without knowing exactly which is, since it is not necessary; only the visualisation of the network is important) and establish personal contacts in a more simple and less awkward way than with a total unfamiliarity between both users, since that unfamiliarity is mitigated by the information provided by the server to the various users about the other users, and is defined in said server as a public access information.

Thus, an object of the invention is an external server that allows simulating a direct communication between a plurality of users in a particular coverage area of at least one wireless network, being in said environment extremely simple and easy to communicate information concerning the user or its activity, or any other relevant, to a group of nearby users (given that they are on the same wireless coverage area).

In a particular embodiment, the system and method object of the invention allows establishing or knowing the distance between users within a certain room by analyzing the strength of one or more WIFI signals detected by mobile devices. Thus, if in two mobile devices match the strengths, having established a correspondence between signal strength and meters from the transmitter, it is possible to indicate to another mobile device in communication the radius or approximate distance of the mobile device. The same in the presence of several WIFI signals allows establishing a triangulation of the position of mobile devices, adjusting the exact distance between devices within coverage, therefore, assuming an important advantage over the documents cited in the State of the art. In the case of a single WIFI network, the system, as an additional advantage, can establish a motion algorithm in respect of the two mobile devices, so that it request the movement of both toward a matching place, discriminating the movements that move both devices away.

A technical problem that is complementary to the first that solves the present invention is the need for users of being activated in the network, automatically or without intervention. The first step would be that the user has a series of WIFI MAC in the device or accessible through the server, and once within the area of the same, and if this MAC has associated a virtual room in the server, the user can automatically enter without physical intervention, facilitating the communication with others automatically.

This solution is complementary to the solution of the main objective technical problem of the invention, since it is also resolved (is not affected) the security problem derived from the access to a third-party network as well as the problem of intercommunicate directly the devices without the intervention of a sponsor through a server that creates a environment of confidence and makes impossible to operate any device except the server directly.

Another technical problem that arises when the invention is implemented is the optimization of the battery and communications with the device as a consequence of keeping a full connection with the device when this is in standby mode, and the application is active so that a user can walk next to a virtual room and enter without intervention.

To resolve this additional problem, an asynchronous connection is created with the device that controls the same, and a temporary process programmable by the user is created, which additionally has the ability of learning from the user use or habit, so that it only connects in isolated cases with the server, facilitating the possibility of receiving messages from other users with that asynchronous connection and only when the user wants to interact with other users or know more details about the room in which he/she is active, then the synchronous communication between the device and the server is established.

An advantage inherent to the present invention is the possibility of creating subrooms within a particular virtual communication room. This fact is related to the creation of safe profiles for social networking with strangers or related to the place where they are.

The relationship between the profiles and a certain room or position makes it possible that in the places as trusted by the user, this may have an open confidence profile, and in others a more restrictive profile, with not much data that not identify him/her personally.

Another inherent advantage of the invention is that a co-responsibility system can be established so that if I have a profile with plenty of privacy in a room, the users of the room can have the same profile with me and with others that offer more information to provide a more complete profile. Also this information can be offered in a partial and correspondent manner so that a user offers a particular fact as his/her job, and views the data of the rest of users.

Inherently to the invention, the can be established public and private rooms, where visitors can know information different from that of the common users or persons belonging to a particular defined group, for example, members of the same company.

It is possible to automate the profiles based on rooms, as an advantage of the invention. So it is possible this automation of the privacy profiles or profiles containing different data or oriented based on the place or event wherein I am or I can be, allows the user keeping for example a professional privacy profile in the places where he/she works, and one or more leisure profiles in moments or places where the user is idle. In addition, each of these users can also have multiple accuracy levels depending on the situation for example, if I'm in my habitual country, my profile can be of a very different type of which I can use in another different place, for example in terms of language, in this way the user does not have to interact with the device to change the presentation of the information about his/her profile in the language that is more habitual in the place, or depending on the language of the recipient of the profile.

Profiles can also change temporarily, i.e. there are defined a number of leisure hours, for example, going to the gym in the evening, and this place or this virtual room matching with this action has a leisure privacy profile, although this is used on weekdays. Profile can also feed on the actions in a particular virtual site or room in a way that every time that a user is in that site, this profile may inform third parties that the user is a regular customer or someone that goes to the site more sporadically, allowing the rest having this information, that allows users reducing the level of uncertainty without the user gives many data that may compromise his/her privacy. These profiles can be related to words that identify the type of person who is the owner of the profile, for example, extrovert profile, or prudent profile. It is possible to identify singularities and opinions of third parties with respect to the owner of the profile without necessarily saying who is in particular the person.

The present invention must also have a temporal relationship between rooms and users to provide information to user about the type which is the next place to go and what kind of people I am going to find, of course what kind of people there are at this time.

Another advantage inherent to the invention is the assignment to the results from a search engine web of WIFI rooms that have to do with the user and the web site.

Privacy management is very important so that people want to generally manage his/her privacy based on different variables. Privacy is generally more strict in not working environments since they are more open to the uncertainty of establishing harmful relationships for the interests of the person.

To resolve this issue, the invention develops a communication system where there are different levels of privacy that may be associated with the place where the person is located. It is not the same to be in a business meeting where privacy is not as necessary as in an environment of risk, a high-crime neighborhood. This privacy is defined by a series of profiles that can be activated automatically when arriving at a particular place which links to the typology of the profile, or manually. The may also be related to the information receiver, i.e. if this belongs to a known environment, the profile that the system offers the user may be more extensive than if this is not the case, and in a certain place, several people may have a profile different of a system user so that to the person A who belongs to a nearby environment accesses a more intimate profile than a person B that it is unknown if he/she is close or not.

This profile may also be based on the correspondence of profiles, i.e, if a user offers a profile in a place with very little information, the rest of users can offer profiles that also contain little information, since if one shares only his/her photo and the area where he/she lives, the rest can offer the same kind of information, and if this user changes his/her profile to more public e.g. name, area where he/she lives, marital status and occupation, the rest can do the same.

The possibility of creating environments of confidence through guarantees of third parties is also interesting, they guarantee that the person is reliable, and these guarantors provide reliable information about who they are.

Also the system allows the automatic or manual development from profile status of low confidence to high confidence.

A major technical problem facing the current systems is the security and privacy not only of the WIFI network, as mentioned above, but in peer to peer wireless networks like those established in the Bluetooth standard. Thus, the message exchange between mobile devices is established between mobile devices, or the communication (with the risks that this implies) is opened or otherwise the communication between devices unknown to each other is not established.

It is unknown by the Applicant, skilled in the art, any document or publication that comprises the features listed in the present specification and they basically reside in discrimination of the user position based on WIFI networks within these virtual spaces and the sending of messages by users by changing his/her name (Nick) within said virtual spaces.

A novel aspect of the present invention is that it allows discriminating networks depending on the position, searching a spectrum as determined as possible. So, if we have a room created that detects two networks equal to each other and one different for two specific mobile phones, it is possible to eliminate the need of detecting the third room because it is not identificational, i.e., a very particular spectrum depending on link historical is required.

A technical problem that is complementary to the first that solves the present invention is the need for the users of being activated in the network either automatically or without his/her intervention. The first step would be that the user has a series of WIFI MAC in the device or accessible through the server, and once within the area of the same, and if this MAC has associated a virtual room in the server, the user can automatically enter without physical intervention, facilitating the communication with others automatically.

This solution is complementary to the solution of the main objective technical problem of the invention, since it is also resolved (is not affected) the security problem derived from the access to a third-party network as well as the problem of intercommunicate directly the devices without the intervention of a sponsor through a server that creates a environment of confidence and makes impossible to operate any device except the server directly.

In an object of the invention related with the main technical object is described how can be established a Bluetooth® network between at least two mobile devices within the system, so that the users can send to each other several messages by changing of the identifying name of the device within that peer to peer Bluetooth® network established between the devices.

Accordingly a communication without direct connection is established, and therefore completely safe, since in fact the message is the new name of the device and is visible by the other devices. Therefore and given that there is no link, access not authorized between mobile devices is virtually impossible.

Finally, in a embodiment of this invention, within each mobile device there is an application that interprets the message and creates a historical that allows its replication by other devices within the range. Thus, for example, ifwe have a device indicating in its name the message "connect with room I", the server of the system will manage the connections to that room and each subsequent mobile device that connects to that room will have the capacity of changing, at the same time, the device name for replicating it within its range, thus being established a viral-type advertising of the message. However, the access to the server is voluntary, the viral replication can simply be established in the reception of the message (i.e., viewing the name of the device) and it is replicated as the name of the device itself.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

There follows a very brief description of a series of drawings that help to provide a better understanding of the invention and which are associated expressly with an embodiment of said invention that is presented as a non-limiting example thereof.
Figure 1 schematically shows a first application of the communication method involving the creation of virtual spaces, object of the present invention.
Figure 2 schematically shows a second application of the communication method involving the creation of virtual spaces, object of the present invention.
Figure 3 shows a flow chart of the sending of messages between mobile phones within a certain coverage area or vision of a virtual space in a particular embodiment of the invention.
Figure 4 shows a flow chart of the of the sending of messages between mobile phones connected within a virtual space in a particular embodiment of the invention.

### Preferred embodiment of the invention

As it can be seen in the accompanying figures, the communication system involving the creation of virtual spaces, object of the present invention, is characterized in that comprises: (a) a plurality of mobile devices (**1, 1')** associated with at least one user, wherein said mobile devices comprise at least data transmission means of the type GPRS, or the like, and means for accessing a wireless network of the type WIFI, or the like; and (b) a server 2 with means for accessing the Internet and comprising at least means for storing user data of a plurality of users and means for identifying said users in said data base; and where said server **2** associates with the users within the coverage area of at least one predetermined wireless network **(3, 3'),** receiving from each mobile device (**1, 1'**) information regarding to the wireless networks (**3, 3'**) within the coverage radius of the mobile devices and sending the data from each mobile device (**1, 1'**) to the other mobile devices within the coverage radius of the wireless network (**3**, **3**') identified by the mobile devices by means of a unique identification code.

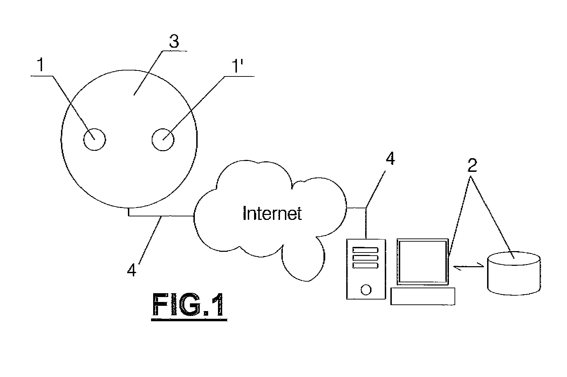

The application example shown in Figure 1 shows how two mobile devices (**1, 1'**) are within the coverage radius of one predetermined wireless network **3.** When the first device **1** enters in the coverage area of the network 3 sends a GPRS signal **4** to the server **2,** wherein that signal comprises at least the unique identification number of the wireless network **3** and the user identification code.

After the reception of the GPRS signal **4,** the server **2** verifies the existence of other mobile devices **1',** and indicates them the presence of the first mobile device **1** sharing with them the user public information associated with said first mobile device **1** that is in the server **2.**

Once determined the presence of the first mobile device **1** by the second mobile device **1',** said second mobile device **1'** sends a second GPRS signal **4**' to the server **2** with at least the acceptance of the communication with the first mobile device **1** being established a virtual space in the server **2** associated with the wireless network 3 and allowing said space the communication between the first device **1** and the second device **1'.**

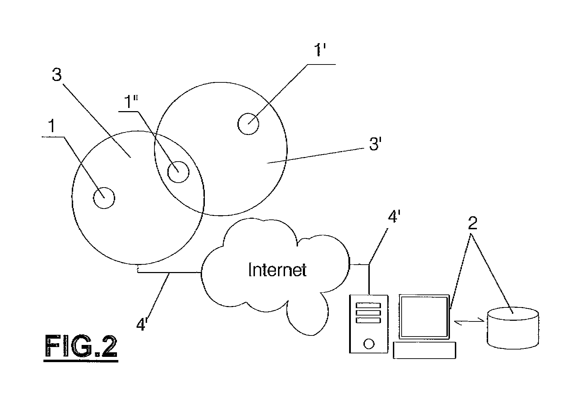

In the example shown in the Figure 2, a first mobile device **1** has access to a first wireless network 3, while a second mobile device **1'** has access to a second wireless network **3'.** Despite the fact that said devices (1, **1'**) do not concur in the same network, the server **2** knows that a third device **1"** has access to both wireless networks **(3, 3').**

However, said third device **1"** sends a GPRS message **4"** with at least the identification data of both networks **(3, 3')** and the user identification code. After the reception, the server **2** associates this data with a user and sends the presence of the first and second devices (1, **1'**) in both networks (**3,3'**) so that said third device **1"** enables the server **2** to establish a virtual area which links both networks **(3, 3**'), acting the third device **1"** as a bridge between them, and allowing access to the same of the first and second device (**1,1'**) and enabling the communication between the three devices (**1, 1', 1"**).

The system and method object of the invention can also be used as a means of transmission of advertising information, wherein a mobile device **1,** when enters in a wireless network 3 and sends the GPRS signal **4** to the server **2,** this returns information associated with said network such as for example the restaurant menu, commercial offerings of the day, etc.

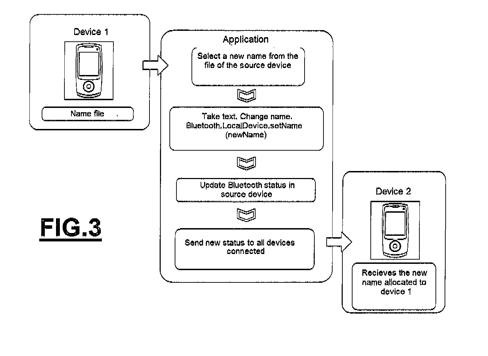

The Figure 3 schematically shows how can be established a direct communication between the mobile devices (**1**, **1'**).

First of all, the first device 1, or source device of the message, selects a new name from a file located in the first device itself 1, or by means of a message written by the user in an appropriate application. After that, the text of the created file is taken, and the change of name visualized by the rest of devices **1'** is established within the range of said first device **1** and which in the standard for Bluetooth is comprised between 10-15 meters. This change of name is set with the command

### Bluetooth.LocalDevice.setName (newName)

Subsequently the Bluetooth status of the first device 1 is updated so that all the devices (the second device **1**') within its range observe through the change of name the message that the first device **1** wants to launch, for example, "connect to room A", so that the rest of devices are inform about the creation and access to a determined room.

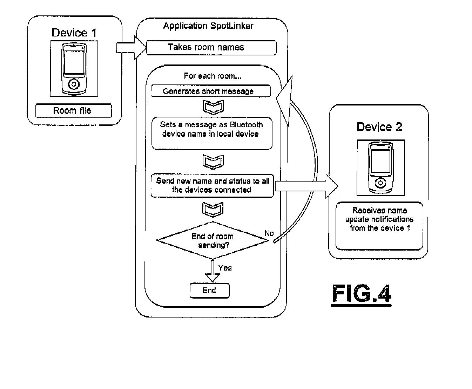

In a created room it can be set a communication similar to that indicated, as can be shown in Figure **4****,** for which a first step of generating a room name in a device **1** enabled for this purpose is set, establishing as a short message and Bluetooth name of the first device **1**, being sent a new name and status to all devices **1'** connected in the room, being sent from the server **2** (that is the actual room manager) the update notices about the changes of name of the first device **1.**

The described system and method solve other additional technical problems, as the impossibility of identification through GPS that the user finds in a particular place, since the position is committed to the energy consumption of the GPS (the higher precision, the higher consumption). It also solves the problem of the lack of capacity of the GPS to locate the device (1, 1', 1") if it is not open-sky.

Some systems of the State of the art link the GPS position with the data of the WIFI network in such a way that the system, when placing the WIFI network within some GPS coordinates, enables the device (1,1',1") simulates being in said coordinates. Since it is a simple simulation, part of the coordinate data received prior to these also can be inaccurate since the source of the same may be distorted both by the definition and the signal quality and, of course, it is inoperative in places where there is no access both in height and in the middle of roofed shopping malls. However, any document in the State of the art indicates how to facilitate the automatic entry into a place that is associated with a database of places located on the server itself (2), as described in the present invention.

The invention in a practical embodiment checks the WIFI network **3** and associates it with a particular virtual room, so that when the system detects that it is inside the room during a certain time considers that it is in that particular location. These rooms created in WIFI environments through the simple detection of the same and the identification in a server 2, also can be improved with the link of all these data with a specific particular address.

For example, if the place X is linked to the data of a specific WIFI, it is understood that the detection of the device (1, 1', 1") in the network of the place X implies that it is in said location and not in another.

All this facilitates a check in automatically in the specific location of the database of maps in the server 2 since this is related to a particular WIFI MAC. As a result, it is possible to position to a user in a particular space, but always taking into account that said position is the coverage area of the network **3,** and not a specific position (coordinates). Thus, it is not possible to distinguish the height of the device (1, 1', 1") within a particular confined space.

Another issue to take into account is the allocation process of the WIFI MAC with a particular point of interest on a map, so it can be offered the user a number of locations in which the user could be, selected by a particular GPS position filter and asking the user where he/she is, once himself/herself admits that is in one of these positions, allowing the system to detect which are the more appropriate MACs to identify that location of the map database.

Through this embodiment it is also risen the additional problem of differentiating between the static and mobile MAC without knowing it in advance, trying to also choose the more stable MACs to offer a room as safe as possible. There are currently devices (1, 1', 1") that although they are WIFI devices, they are not in the place where the virtual room has been created, so the room could be created based on that mobile MAC or give it a particular address of a map, with the result that in both cases, when a second user would go to the location the room would not be displayed. For this reason that the rooms in this embodiment are not created with a unique MAC, but they are use several, so it is much less likely that all be mobile, and through several visits by different users at different times is analyzed which is the most reliable MAC in the location, both by the static MAC users turn it off at a certain time and because it is difficult that mobile users are always in the location transmitting a signal of a WIFI network.

In the same way, it is possible to create a user action protocol to verify that the chosen MAC is the static in the place or otherwise to analyze the strength of the WIFIs as described above, discarding any of them.

The virtual rooms can be created via a WIFI created by a mobile device (1, 1', 1") so that these rooms are simultaneously with the user on their movements, carrying the virtual room with them, wherein for said identification, it can be carried out several checks of the WIFI in different places and choose the mobile MAC. This case can also be used to discard mobile MACs or to link them to a particular user, in such a way that either in the server, this option is more reliable, or in the user, we discard in the case of creating a static room or use it in the case of creating a mobile room.

To resolve the problem of the reliable identification of a MAC with an address of a database, the system can also analyze different strengths of the MACs and assign to a specific address a range of MAC and its strength relationship, because there is an excess of different MAC signals in certain places, moreover some enter physically in others, and therefore knowing the strength of the same we can locate with greater reliability.

In the case of companies like foursquare that use GPS signal or positioning that gives it MAC linked to a GPS position, the MAC of the place can be identified when one or more users check-in manually in the location, i.e. the system of this kind of applications offers a list of places in that GPS position since as there is uncertainty of said a position by the indefinition of the signal, and in many cases the poor or non-existent quality of the same (for example indoors), the user choose from that list near the site where he/she is currently, and the system lets him/her enter the information of that location. At that time, is when a check of the MAC is performed, and the server 2 makes the link between that place on the map and the WIFI MAC(s) detected, in such a way that when a second user, or the same, returns the system automatically detects that is in the place through a periodic checking in MAC background and its corresponding check in the database of the server **2,** allowing the system becomes aware that the user is in place that really is.

All this process can be carried out in multiple ways, the essential is that to an address are allocated one or more MAC so that simultaneously or in particular this MAC allocation system is used to certain places, since the already known system for allocating GPS positions to WIFI MAC is absolutely insufficient to know the reality of the position in a specific location since the source of the GPS data are uncertain both for the visitor and for the system.

That is, if the user that marks this MAC with the GPS position has a different position to the MAC, that is what always happens since the MACs are usually found indoors, the MACs are positioned on the wrong places so the WIFI is positioned in a place other than it actually has, although this system refines its position through users who pass through that place, and the combination of signal strength and definition of position.

However, with the present invention this does not work, since it does not need that relationship with the GPS position and assigns to certain areas virtual spaces of a specific radius around the MAC, the uncertainty range about the position is indifferent and non-existent, since the user is in that room created in that place with the information that has been received for this/these particular MAC(s), building to its around what we call a relational positioning system, since we know that several people are close to each other and of course we can offer them information about the specific location.

The applications of this technology allow the user to receive automatically notices of advertisements or information without his/her direct intervention as well as the site knows which are the users that are in the place and which have this system without his/her direct intervention.

There is a major problem that lies in the very high cost of GPRS connections. The system object of the invention requires an online connection to provide information to the user, so its use is deteriorated for these users. The invention provides two types of information, one about what happens in the virtual room and another that has a much greater validity, it is about the room data and the historical.

To resolve this problem in part, the invention, in a particular embodiment offers information about the type of room features and comments to be downloaded in advance by user, so someone may have information about the rooms and it is activated in the same way that does it when he/she is online, but without the need of connecting to the server **2,** getting information of the place where he/she goes without the need of keeping an online communication.

For that the data of static rooms are selected and these are related with a GPS position so that when the user enters in the area the information which we have defined for this room in particular is presented allowing a basic use of the room. To establish communications between persons who are in an offline room, the system could use Bluetooth connections so that it can get, whenever appropriate, a network associated with a WIFI MAC that works offline and without third party intervention. So it could create a room by combining the capabilities of the two technologies, on the one hand the presentation of information from the WIFI MAC and other hand the communication between users via Bluetooth in two versions, one truly connected and the other with our mid connection through invitations that include message. Also it can be given an order to the system so that in certain rooms the Bluetooth is activated automatically so we can get the critical number of users more easily.

The system object of the invention allows sharing documents between devices (1, 1', 1") through the virtual rooms. The usual way of sharing documents is the direct connection between two devices, this obliges them to share data which can offer the possibility of viruses or unauthorized user data to travel between the connected devices. It also exists in the real world the possibility of receiving invoices or sales receipts when you pay in cash without the invoicer knows the data of the receiver, this keeps the privacy in transactions between the parties, and offers the possibility to the payer to prove anonymously their purchase, in the virtual world there are no effective tools for this function.

The invention solves both problems through a system that allows knowing that the two users are in the same place and they may share data with the intervention of this third party. The most efficient formula would be to join a virtual room and once the system detects that both users are in the same place, the user requiring the document can receive it both automatically.

For example, the system detects that it is the user by the signal strength, when it approaches to the issuer or because the user who issues the invoice recognizes him/her either by his/her photography or the possibility of asking which is his/her nickname.

The invoice could simply be available in an http address for added security during the stay of the operator in the place or until he/she download it.

With this system the privacy can be kept and above all it is automatic, no one is necessarily obligated to know any data from the user, it is enough for the user join in the system for having access to the document in that particular place. In the light of this advantage the system can keep an accounting of the user movements.

Another need that exists is the possibility that the same users of a place hear or view the same media information in a specific location, and only in that place that information. With the room system it is possible to create virtual rooms for example with soundtrack and it can be heard simultaneously by multiple users or otherwise by transmitting said band through the network or having it recorded on the device (1, 1', 1") and activating it at the time of being in this place.

It is possible with the room system to share business cards with specific persons of a certain place, both are in the room and one of them offers his/her card to the other and receives a message that only has to accept so that the system or server 2 shares the cards of both.

It is possible to combine the virtual rooms with other technologies in other particular embodiments of the invention.

Hence it is possible the combination with security cameras or those from phones, since it is possible that cameras can easily detect who is the person, because when it analyzes his/her face and compares it with a database only has to do it with the list of the persons who are present so the coincidence in features is more difficult. The system also allows putting a label to persons who a security camera sees, or identifying that there are more persons in the physical room than in the virtual created in such a way that the system can ask that all members are identified, and detecting if there is someone physically inside the room that is not in the database of users allowed in the system.

For example, if the camera has identified five persons in a place and the system says that there are three in the virtual room. The reason for this application is that the system can serve for face-to-face control in places when the virtual room coincides with the physical room.

With augmented reality is much easier to identify the profile of the person that the system only has to search among the members of the room.

Another combination is to know the Bluetooth MAC of each user and assign it to a card so that if the user has the Bluetooth in operation, it is possible to combine said location with the location of the rooms, it is also possible to make smaller rooms which emit constantly the data of the driver, since he himself/she herself has associated them with a specific user card, for example in a vehicle. Any time this MAC is located by a user, it is possible to know the data of the same, thus it could happen that when a MAC is assigned to a particular user, this has no connection with the server to refresh the users of the system, and however another user that has connection, e.g. 3G, could view the data of the user who is not connected to the system and if he/she wants to share the data of the system via Bluetooth with the user that has no connection because he/she is in a country different from his/her own where does not have data connection, acting the user which has 3G connection as intermediate server to accept him/her in the system.

As a security measure, the connection of both applications may not allow the transfer of data other than those of the system itself, making impossible to use the connection for bad purpose. Another combination of rooms with Bluetooth and WIFI is to create live rooms and which allow a greater environment than the typical of the WIFI signal, when combining them we can reach both areas without coverage with transmission through the users via WIFI, creating a system peer to peer mixed with a traditional client/server system.

For example, we can create strings between users, both connected via Bluetooth that will allow us to expand the rooms physically in a more flexible way than only with the WIFI signal, since if a user is in the place in the Bluetooth radius of a room, he/she is really in the room through another user that can view the WIFI room. It is also a way to allocate a room to each device (1, 1', 1"), so that this can advertise e.g. the services provided, a plumber, electrician, or through the card itself can be emitting both through WIFI, creating its own room with the MAC that emits the phone in WIFI server status or with the Bluetooth MAC.

The system can also identify high-density WIFI environments and when for example acts as WIFI server can use another different frequency range and is more free; for that it makes a scan of the area and checks if there are a greater number of that defined as acceptable for the strength range scanned, and detects the less used.

The system can also create rooms and identify them as specific apparatus, for example it can be created a room on a television with WIFI emission, and identify it as a television so that if the transmitter has a range of possibilities as a room different than a room of another type, for example interact with the content of the same taking into account that it is a TV or a screen of a shop in a mall, in such a way that the room acts in a specific and different way that a room of social relationship, for example the strength can be adapted based on the position that the person should have reading the TV, and discard other lesser strength to provide information about the room; it would also be a way to know by the television who is watching the same offering information to that person and operating with the same.

It could also be interesting to know the type of relationship that may have the different users of a particular MAC-WIFI room; in these users we could distinguish two primary categories, one that of the users who are using this WIFI network and therefore this MAC to exit to the Internet, to these can know them as users of a greater affinity with the same since they have access code to the room; it is also possible to offer different information to one and the other, who use other means to connect to the Internet, i.e. they have no direct relationship with the place of business or the owner of the same.

Another type of relationship with the devices is that of an advertisement in the street, the system may allow that certain advertisements may be offered to the visitors for example foreigners, it is common to arrive at an airport and disable data connection since the rate of that country has large uncertainties in terms of cost and therefore not get the advantages of being connected. The system would allow to the user in an advertisement, for example on a screen of an airport, connecting to the Internet through the advertisement WIFI connection itself and sharing the necessary data with the user, for example to give him/her access to the system and only the same so that it can provide him/her the information that the system has about that room, it can be also done via BT. In the event the user does not have the application that allows the connection to the system, the advertisement can provide the link to the APP shop of the phone brand and download the application necessary to provide the information about the advertisement or point of interest.

Also a Bluetooth or WIFI MAC may be associated with a phone number.

Another problem solved by the invention is the difficulty of creating advertising environments based on radio frequency and not involving the connection of the user with the issuer network, solving the security problems involving the connections between two unknown machines. For that, the user who wants advertise himself/herself in a WIFI radius has active a WIFI signal transmitter, either in his/her own phone convert it into a WIFI server, and assigning to that MAC a particular advertisement or information, so that the system assigns a room with user data, such as for example a delivery van which allows those who are found around the signal sharing either files or information relating to the vehicle or its driver.

This allows segmenting the offer on the basis also of the place in which is the vehicle or the person, for example it can be offered a price per working hour different in an area close to the home of the advertisement owner in relation to a faraway area.

The advantage of this system is that inside any building could offer advertising to all people around, it is sufficient that the phone is the MAC server of the advertiser room.

One of the existing problems consist of identifying the WIFI MAC of the specific site wherein one is located, a formula consist of comparing the WIFI name, i.e., how the user calls to the device, with the site database if there is a match. For example, the restaurant "A" has a WIFI network called WIFIA with the MAC 111111188822, the system for its part has a database of nearby sites through the digital maps, a search is performed and the system detects a closeness among the names, the restaurant A and the WIFIA, assigning said MAC the place known in the map as restaurant A, locating with certainty in this place to people who are within the site and discriminating that MAC of those existing in the site, especially the mobile MAC.

It is also possible that these names indicate for example the specific location in a hotel, for example hotelanawifiswimmingpool, we can assign inside the hotel Ana that coverage area as the pool area; other case is that of the floor hotelanasixthfloorwifi; the system can contextually recognize that is the sixth floor of the hotel Ana and locate in a 3D plane the room of the 6th floor in the hotel Ana, sharing this information both with the user and with a digital positioning map by locating to the user visually in the 6th floor of the hotel, within the virtual room located in said floor and sharing this situation with the other users in the room and with other users of the hotel.

It also improves the payment systems since guarantees the issuer that the device is actually in the place where he/she is paying detecting the signal of the site defined in the database through the WIFI MAC.

Another series of problems that solves the system are related to the privacy of personal information. Because the system creates virtual rooms in certain places, these rooms can be hierarchical or ordered in a similar manner to which the personal information is different depending on the place where we are, in the doctor's office the personal information required is different from the personal information needed in a disco bar.

To resolve this problem the invention creates a series of typological profiles and either the system or the user chooses the profile according to the room in which it is located. For example the user is in a doctor's office is assigned a virtual-physical room and either himself/herself selects the medical information profile or the system does it automatically, in this case no matter the location means, that really crucial is to know that the user is in the office and in this moment the information shared is just the information of a medical profile; of course when he/she goes out, the system does not share this information; also the system can provide within the room this information to users who have a e.g. medical profile; a user registered as a doctor can access the patient medical information profile, however other that does not have that profile do not, also it is possible that the user is who allow or not the access to his/her medical information on virtual request in the room or outside. The medical profile data can be blood group, allergies to medications, etc.; this information could be accessible from a key of emergency so that an ambulance could access in the event that the user is unconscious.

Other possible profiles are for example the administrative or relationship with administrations; when a person goes to for example an Embassy, the system could provide information assigned to the administrative profile that could include the social security number, etc. These profiles can use all kinds of encryption techniques so that they are safe in their information transmission.

Other profiles may be the labor profile, for the working environment, the buyer profile, for shopping, the leisure profile for a night out, the traveler profile, for offering information for example to the passengers of a plane about the peculiarities of the food or in a train so the waiter or air hostess in the plane have already clear the type of food for the passenger in particular, also it can be associated with a virtual ticket.

All of these profiles can be activated automatically replacing completely for example to the train ticket or to the appointment system of a consulting room.

Another peculiarity of the system is the ability to share the capabilities of an online store via the Internet with the capabilities of a physical store, so that the system can offer information about the stock items in the store that you are visiting through knowing that the user is in this store in particular, and add options such as ordering with your user card of the online store without adding any field, only the units that you want to order. So the physical store can have the virtual store stock and its flexibility insofar as the products available increase, and it is offered the information about what products are in the store, including the storage place itself.

In the case for example of a coffee-bar the usual product can be ordered from the table, it is sufficient that both the waiter and customer are the same room, the waiter can identify the client simply by his/her photo or nickname.

Thus this invention facilitates the creation of virtual loyalty cards in much more effective way than traditionally, since associating the nickname to any loyalty system, every time that nickname is in the shop it can be offered to it the advantage that is deemed appropriate. If in addition we share with the user the contents of the orders could know the preferences of the same when he/she enters the room.

A great advantage of this system is that the user can remain anonymous but he/she is located when is in the room through the nickname, in addition we also can interact with him/her through a messaging system between users.

Another feature of the system is the creation of virtual mailboxes in physical places, so that the user can have organized their information from those mailboxes and contact with the site through them; in addition currently the email is also saturated with information that does not interest us, however it can be very interesting to have virtual mailboxes in specific locations so that each person can have messages of that specific place; it is a much more interesting way to save the information, since it is based on the knowledge of these places. So a hotel could send virtually to all past and present guests a message to the virtual mailbox that each client has in that place by the mere fact of being customer and offer information; this mailbox for the user of the same is accessible from the outside the place, for example by moving on a map, but is not in the mailbox itself.

Another feature is the tracking between people discriminating areas or places, e.g, those of personal-type, i.e. the rooms for professional use can allow users the knowledge, by third parties determined or not, that the user is in that place, however in the places of personal use is not allowed. This feature comes to solve the problem of indiscriminate tracking through a person location systems; this kind of systems cause much reject since violate the privacy of the information making the person is more vulnerable. This characterization system of the rooms according to certain social characteristics both of the place in particular and the person in particular, allow combinations of the type:

The knowledge that the waiter of the has been in the job position, or at least his/her phone, although it can combined for example with a video or audio recording or any other method that lets us to know that the person has been in his/her job position, and when the waiter leaves the work, the person responsible for the store has no access to what the waiter has done, since although for the rest of the public, the local has a private or personal nature, for the waiter has a working character. That is, the system allows categorizing the physical environments on the basis not only of their general nature but on the basis of their nature depending on the person who visit.

Thus it is possible to create job tracking systems, for example of a workplace or personal group, friends that can follow what we do without knowing for example professional or more private matters, and this can be selected in a manual or automatic way, assigned to the class or category both general and particular of a certain place.

Another interesting topic is to define the room of a place, i.e. the most suitable MAC, when it is clear that a group belongs to the same physical location. For example, in a class could exist a user group named class that are in the same place at that time, it can be known that they are in the same place because all view some MAC, or viewing different MAC, there are MACs that somehow are common.

Thus, for example, one of the users has for example access to network A and network B while some users view only the network A or network B, i.e, they are part of the same close group. With regard to identify the time is enough to confirm the time in which they are in that place, or view in a database where they should be. As well, we have the group identified, however it may be the case that this group wants access to a differential information regardless of which are in the place, for example the class visitors, since all the users are grouped with the category that belong to that class, we can make a quite secure group for sharing information with each other, discarding of the virtual environment to those who still are in place, but not belong to the class group.

Another relevant aspect of the invention is the ability to share information only in a specific location, i.e. the digital information could be seen or modified by users who are in that room in particular only through knowing the room in which the user is, so although we know the key and the password for a specific file or access to information, only those who are in the room are able to access that information. For example, a company could assign to the confidential files of the same the need of verifying that the user is physically in a specific room, either only viewing the information, or viewing it and being really connected for example to the WIFI on which that room has been created.

Of course these documents that are virtually in the physical room have better security than those which do not have this check. It also enables the verification of information, by associating a user with a room and for example a virtual ticket, we can know that the ticket belongs to that user or at least is activated in the network as that user, so that the hostess who is checking the ticket does not view a digital document that can be copied easily, she view document and can also view how this interacts for example on the client screen when she activates in the screen the entry of the same, existing a real connection between both.

In the case of mobile rooms for example in a vehicle, any of the users in non-coverage situations could perform the peer to peer functions of a user server and act as an identifier of the same connecting for example to a WIFI network without connection to the Internet but with connections between the devices; this example is suitable for a cruise on the high seas where the server is within the cruise itself, either one dedicated or a phone that makes the isolated function of a server.

For travels by train or bus where users have connection cuts in their 3G or GPRS networks, it can be used a memory cache to provide information from the user who knows that he/she has lost the connection but at the same time knows that it is in the common room so he/she can continue offering information although it is only updated when they enter again in a coverage area keeping for example the list of active users.

Another advantage inherent to the invention is the possibility of associating the virtual rooms created with Web pages that inform about a particular place or event.

## Claims

1. Communication system involving the creation of virtual spaces, comprising:
(a) at least one mobile device (1,1',1 ") associated with at least one user, wherein said mobile devices comprise at least data transmission means and means for accessing a wireless network; and
(b) a server (2) with means for accessing the Internet and comprising at least means for storing user data of a plurality of users and means for identifying said users in said data base;
wherein said system **is characterized in that**
the server (2) associates with the users within the coverage area of at least one predetermined wireless network (3, 3'), receiving from each mobile device (1, 1', 1") information regarding the wireless networks (3, 3') within the coverage radius of the mobile devices and sending (4, 4') the data from each mobile device (1, 1', 1") to the other mobile devices within the coverage radius of the wireless network (3, 3') identified by the mobile devices by means of a unique identification code and/or the name of the network and/or sending the information of a virtual space already created so that a virtual space is established in the server (2) associated with the wireless network (3) and allowing said space the communication between the first device (1) and the second device (1').

2. Communication system according to claim 1 wherein it also includes means to establish a Bluetooth® communication between devices (1, 1', 1") so that in each communication it can be established a change of the name of the first device that is configured as the sender of the message.

3. Communication method involving the creation of virtual spaces implemented in the system of the claim 1 and 2 **characterized in that** it comprises:
(i) a first step wherein a first device (1) enters the coverage area of a wireless network (3) and sends a signal (4) to server (2), wherein that signal comprises at least the unique identification number of the wireless network (3) and the user identification code and/or the name of the network or by sending the information of a previously created virtual space to the device itself (1, 1', 1");
(ii) a second step wherein after the receipt of the signal (4), the server (2) verifies the existence of other mobile devices (I') and indicates them the presence of the first mobile device (1) sharing with them the user public information, including the room information, associated with said first mobile device (1) that is in the server (2); and
(iii) a third step wherein once determined the presence of the first mobile device (1) by the second mobile device (1'), said second mobile device (1') sends a second signal (4') to the server (2) with at least the acceptance of the communication with the first mobile device (1) being established a virtual space in the server (2) associated with the wireless network (3) and allowing said space the communication between the first device (1) and the second device (1').

4. Method according to claim 3 **characterized in that** when a first mobile device (1) has access to a first wireless network (3), while a second mobile device (1') has access to a second wireless network (3') and a third device (1") has access to both wireless networks (3, 3') said third device (1") sends a message (4") with at least the identification data of both networks (3, 3') and the user identification code; and where after the reception, the server (2), associates this data with a user and sends the presence of the first and second devices (1, 1') in both networks (3, 3') so that said third device (1") enables the server (2) to establish a virtual area which links both networks (3, 3'), acting the third device (1") as a bridge between them, and allowing access to the same of the first and second device (1, 1') and enabling the communication between the three devices (1, 1', 1").

5. Method according to claims 3 and 4 **characterized in that** when the mobile device (1, 1', 1") enters in the coverage area of the wireless network (3, 3') and sends the signal (4, 4') informing about its presence to the server (2), this returns information associated to said wireless network (3, 3').

6. Method according to claims 3 to 5 wherein the first device (1) or source device of the message, selects a new name from a file located in the first device itself (1) or by means of a message written by the user in an appropriate application; and where after that, the text of the created file is taken, and the change of name visualized by the rest of devices (1', 1") is established within range of said first device (1) for subsequently updating the Bluetooth status of the first device (1) so that all devices within its range observe through the change of name the message that the first device (1) wants to launch; otherwise they are invited to a connection where the name provided is the message that the first device (1) wants to launch.

7. Method according to claim 6 wherein the rest of devices (1, 1', 1") reply, after the acceptance of their respective users, the name of the first device (1).
